# NEW EUROPEAN PATENT SPECIFICATION

(11) **EP 0 521 908 B2**
(45) Date of publication and mention of the opposition decision: **18.10.2006**
(45) Mention of the grant of the patent: 03.07.1996
(21) Application number: 91906066.5
(22) Date of filing: 19.03.1991
(51) Int. Cl.: C08F 4/646, C08F 10/00

(54) **CATALYST SYSTEM OF ENHANCED PRODUCTIVITY**
KATALYSATORSYSTEM MIT GESTEIGERTEM LEISTUNGSVERMÖGEN
SYSTEME CATALYTIQUE A PRODUCTIVITE AMELIOREE

(30) Priority: 20.03.1990 US 496378
(43) Date of publication of application: 13.01.1993
(73) Proprietor: ExxonMobil Chemical Patents, Inc., Linden, NJ 07036-0710 (US)
(72) Inventor: HLATKY, Gregory, George, Houston, TX 77062 (US); TURNER, Howard, William, Houston, TX 77059 (US)
(74) Representative: UEXKÜLL & STOLBERG
(86) International application number: PCT/US1991/001860
(87) International publication number: WO 1991/014713

(56) References cited:
- EP-A- 0 260 130
- EP-A- 0 273 655
- EP-A- 0 277 003
- EP-A- 0 426 638
- EP-A- 0 427 696
- EP-A- 0 472 697
- EP-A- 0 513 380
- WO-A-91/09882
- US-A- 4 239 870
- US-A- 4 398 004
- US-A- 4 808 561
- US-EP- RE4 424 139
- Ullmanns Encyklopädie der technischen Chemie, 1980, 4. Ed., Vol. 19, pp. 167-201
- Römpp Chemie Lexikon, 6th Ed., 1966, columns 4511-4514
- J. Boor Jr., "Ziegler-Natta Catalysts and Polymerizations", Academic Press, 1979, pp. 61-65

## Description

### Field of the Invention

This invention relates to the use of a Group III-A element compound for improving the productivity of an ionic metallocene olefin polymerization catalyst. This catalyst is the reaction product of a metallocene of hafnium and an ionic activator compound comprising a cation which will irreversibly react with at least one ligand contained in said hafnium compound and an anion which is bulky labile and noncoordinating with the hafnium cation produced upon reaction of the metallocene and activator compound to form the catalyst. Catalyst systems have enhanced productivity over similar catalysts not using Group III-A compounds for the co-polymerization of ethylene.

### Background of the invention

European Patent Application 277,004 (1988) describes a further advance in metallocene catalysts: a new metallocene catalyst which does not require either an alkyl aluminum or an alumoxane as an activator. The Group IV-B metallocene catalyst is prepared as a reaction product of a Group IV-B metal metallocene compound and an ionic activator compound. The ionic activator comprises a cation which will irreversibly react with at least one ligand contained in said Group IV-B metal compound and a labile, bulky anion which is a single coordination complex having a plurality of lipophilic radicals covalently coordinated to and shielding a central charge-bearing metal or metalloid atom the bulk of said anion being such that upon reaction of the activator cation with a reactive ligand of a bis(cyclopentadienyl) Group IV-B metal compound to form a Group IV-B metal cation, the anion of the activator is sterically hindered from covalently coordinating to the Group IV-B metal cation. Hence, as described in our copending application, an active catalytic species of a metallocene is formed, namely an ionic pair comprising a metallocene transition metal cation paired with a noncoordinating anion of the.activator component

The new metallocene catalyst system (hereafter referred to as an "ionic metallocene catalyst") eliminates the need for an expensive alumoxane activator. The ionic metallocene catalyst also offers other advantages over the metallocene-alumoxane catalysts such as permitting the production of polyolefin products of narrow MWD and of significantly higher weight average molecular weight at high rates of catalytic activity while.also permitting better incorporation of comonomers and the control of the chain end chemistry of the polymer products.

It is believed that the active catalytic species in the metallocene alumoxane catalysts is an ion pair. It is also believed that this ion pair active species is formed through a Lewis acid-Lewis base reaction of two neutral components (the metallocene and the alumoxane) leading to an equilibrium between a neutral, apparently catalytically inactive adduct, and an ion pair complex which is presumably the active catalyst. As a result of this equilibrium, there is a competition for the anion which must be present to stabilize the active Group IV-B metal cation of the active catalyst species. In the case of the ionic metallocene catalyst described herein, the metallocene and the activator react irreversibly and the equilibrium almost exclusively favors the catalytically active ion pair complex. Hence, the new ionic metallocene catalyst has a very high activity and is able to produce polyolefin products of high molecular weight and narrow molecular weight distribution.

Unfortunately, the active catalytic ion pair species of our ionic catalyst may irreversibly be inactivated by Lewis base impurities contained in the polymerization diluent or the monomer supply which which the ionic catalyst is used. The most prominent Lewis base impurities present in a polymerization diluent and/or a monomer are oxygen and water. Despite the most elaborate control, some, although minute, quantity of such Lewis base impurities will invariably be present in a polymerization diluent and/or the monomer supply consequently, with the new ionic catalyst, from which aluminum alkyl and/or alumoxane has been eliminated as an activating cocatalyst, no reagent is present in the ionic catalyst to neutralize such impurities other than the ionic catalyst itself. Accordingly, some amount of the active catalyst species of the new ionic catalyst is consumed and deactivated by the neutralization of impurities in the polymerization diluent and/or monomer supply. Accordingly, the full rate of productivity inherent in our ionic catalyst composition has not yet been realized in practical application.

It would be desirable to discover an additive which could be used during polymerization which would neutralize impurities contained in the polymerization diluent and/or monomer supply without significantly affecting the ability of these ionic catalysts to produce superior polyolefin products of high weight average molecular weight, narrow molecular weight distribution, and high comonomer incorporation.

### Summary of the invention

The invention provides a process for producing copolymers of ethylene monomer comprising
(I) contacting the monomer in a polymerising diluent with:
   (a) an ionic pair comprising
      (i) a cation of a bis(cyclopentadienyl) hafnium compound, and
      (ii) a labile, bulky anion of an activator compound which anion is a single coordination complex having a plurality of lipophilic radicals covalently coordinated to and shielding a central charge bearing metal or metalloid atom, the bulk of said anion being such that the anion is sterically hindered from covalently coordinating to the hafnium cation, and the lability of said anion being such that it is displaceable from said hafnium cation by an unsaturated hydrocarbon having a Lewis base strength equal to or greater than ethylene; and
   (b) a hydrolysable Lewis acid of the formula 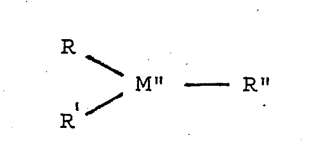
   wherein M" is a Group III-A element, R, R' and R" are independently, a straight or branched chain alkyl radical, a cyclic hydrocarbyl radical, an alkyl substituted cyclic hydrocarbyl radical, an aromatic radical or an alkyl substituted radical having from C₁-C₂₀ in carbon number, and R' may also be an alkoxide radical having from C₁ to C₂₀ in carbon number,
   the ionic pair being the reaction product of a bis(cyclopentadienyl)hafnium compound having a proton reactable substituent, and an activator compound comprising a cation having a donatable proton, and said labile bulky anion,
   said hafnium compound and said activator compound being present in amounts sufficient to provide a catalytically active species; and said Group III-A element compound being present in an amount sufficient to neutralize adventitious impurities
(II) continuing the contacting step of (I) for a sufficient period of time to polymerize at least a portion of the monomer, and
(III) thereby forming a copolymer product.

The catalyst system, like the ionic metallocene catalyst without additive disclosed in European patent Application 277004, permits the production of polyolefins of high molecular weight and narrow molecular weight distribution (MWD). Moreover the polyolefin products of the catalyst system have a narrow comonomer distribution (CD) approaching randomness and improved sequence distribution of comonomers as compared to the products of the prior art metallocene-alumoxane supported catalysts. Further, like the ionic metallocene catalysts of the copending application, the catalyst system are useful in the polymerisation of olefins, diolefins, and/or acetylenically unsaturated monomers either alone or in combination with each other. However, the addition of an additive which neutralizes those impurities capable of deactivating the active catalytic sites of the ionic metallocene catalyst provides a catalyst system of greatly improved productivity without significantly affecting molecular weight or extent of comonomer incorporation.

Since the invention's ionic metallocene catalyst component comprises the ionic metallocene catalyst of European Patent Application 277,004, the metallocene component of the catalyst may be selected from the bis(cyclopentadienyl) derivatives of a hafnium compound containing at least one ligand which will combine with an activator component or at least a portion thereof such as a cation portion thereof. The activator component of the catalyst is an ion-exchange, compound comprising a cation which will irreversibly react with at least one ligand contained in said hafnium compound (metallocene component) and an anion which is a single coordination complex comprising a plurality of lipophilic radicals covalently coordinated to and shielding a central formally charge-bearing metal or metalloid atom, which anion is bulky, labile and stable to any reaction involving the cation of the activator-component. The charge-bearing metal or metalloid may be any metal or metalloid capable of forming a coordination complex which is not hydrolyzed by aqueous solutions. Upon combination of the metallocene component and activator component, the cation of the activator component reacts with one of the ligands of the metallocene component, thereby generating an ion pair consisting of a hafnium cation with a formal coordination number of 3 and a valence of +4 and the aforementioned anion, which anion is compatible with and noncoordinating toward the metal cation formed from the metallocene component. The anion of the activator compound must be capable of stabilizing the hafnium cation complex without interfering with the ability of the hafnium cation or its decomposition product to function as a catalyst and must be sufficiently labile to permit displacement by an olefin, diolefin or an acetylenically unsaturated monomer during polymerization. The selection of suitable metallocene-activator pairs to produce ionic metallocene catalysts is dealt with in European Patent Application 277,004.

The additive component of the catalyst system is a hydrolyzable Lewis acid able to neutralize those adventitious impurities such as moisture or oxygen which reduce the activity of the ionic metallocene catalyst component. These hydrolyzable Lewis acids should not be cocatalysts in themselves for the metallocene components of the ionic metallocene catalyst since this will result in more than one type of active site (ionic metallocene and metallocene-Lewis acid) thereby potentially adversely affecting the properties of the polymer product such as, for instance, the product MWD. Furthermore, the hydrolyzable Lewis acid should be compatible with the ionic metallocene catalyst and useful under the temperature and pressure conditions required for polymerization reactions. Thus, the useful Lewis acids comprise hydrocarbyl compounds of Group III-A metals.

### Detailed Description of the Preferred Embodiments

As previously noted novel, metallocene based catalysts have been disclosed in European Patent Application 277,004 which are capable of producing polyolefin products, particularly polyethylene, and copolymers of ethylene and α-olefins, particularly ethylene-propylene copolymers, having greater weight average molecular weights at comparable or narrower molecular weight distributions than polyolefin products obtainable with a similar metallocene which is activated by an aluminum trialkyl or alumoxane cocatalyst. These novel metallocene based catalysts are referred to as "ionic metallocene catalysts."

This invention comprises the discovery that certain Group III-A element compounds may be used to prepare a catalyst system comprising an ionic hafnium metallocene catalyst which system has an enhanced rate of productivity, without significantly adversely effecting the advantageous properties of the polymer product producible with such ionic metallocene catalyst. With a catalyst system as described - i.e., a system of an ionic hafnium metallocene catalyst and a Group III-A element compound additive to enhance productivity -- a polyolefin having the advantageous properties of high weight average molecular weight and narrow molecular weight distribution may be produced at a significantly reduced concentration of the ionic hafnium metallocene catalyst.

The catalyst system of the invention comprises an ionic hafnium metallocene catalyst and a G roup III-A element compound. The process of the invention comprises the copolymerization of ethylene monomer to a polyolefin product of high weight average molecular weight and narrow MWD in the presence of such catalyst system.

### The Ionic Metallocene Catalyst

The ionic metallocene catalyst employed in accordance with the invention comprises the reaction product of a bis (cyclopentadienyl) hafnium compound containing at least one ligand which will combine with an activator component or at least a portion thereof such as a cation portion thereof. The activator component of the catalyst is an ion-exchange compound comprising a cation which will irreversibly react with at least one ligand contained in said hafnium compound and a labile, bulky anion of an activator compound, which anion is a single coordination complex having plurality of lipophilic radicals covalently coordinating to and shielding a central charge-bearing metal or metalloid atom, the bulk of said anion being such that upon reaction of the donatable proton of the activator cation with the proton reactable ligand of the bis(cyclopentadienyl) hafnium compound to form a hafnium cation, the anion of the activator compound is sterically hindered from covalently coordinating to the hafnium cation, and the lability of the activator anion is such that it is displaceable from said hafnium cation by an unsaturated hydrocarbon having a Lewis base strength equal to or greater than that of that of ethylene.

### Metallocene Component of the Ionic Metallocene Catalyst

The hafnium compounds useful as the metallocene component of the catalyst system employed in the process of this invention are bis(cyclopentadienyl) derivatives of hafnium. In general, such useful hafnium compounds may be represented by the following general formulae, in which "Cp" represents a cyclopentadienyl ring:

1. (A-Cp)MX₁X₂

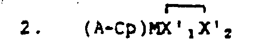

3. (A-Cp)ML

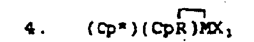

wherein: M is a Group IV-B metal namely hafnium (Hf); (A-Cp) is either (Cp)(Cp*) or Cp-A'-Cp* and Cp and Cp* are the same or different substituted or unsubstituted cyclopentadienyl radical and A' is a covalent bridging group containing a Group IV-A element; L is, an olefin, diolefin or aryne ligand; each X₁ and X₂ independently, is a hydride radical, hydrocarbyl radical having from 1 to 20 carbon atoms, substituted-hydrocarbyl radical having from 1 to 20 carbon atoms wherein 1 or more of the hydrogen atoms are replaced with a halogen atom, organo-metalloid radical comprising a Group IV-A element wherein each of the hydrocarbyl substituents contained in the organo portion of said organo-metalloid, independently, contain from 1 to 20 carbon atoms; X'₁ and X'₂ are joined and bound to the metal atom to form a metallacycle, in which the metal, X'₁ and X'₂ form a hydrocarbocyclic ring containing from 3 to 20 carbon atoms; and R is a substituent, preferably a hydrocarbyl substituent, having from 1 to 20 carbon atoms on one of the cyclopentadienyl radicals, which is also bound to the metal atom.

Each carbon atom in a cyclopentadienyl radical (Cp) may be, independently, unsubstituted or substituted with the same or a different hydrocarbyl radical, substituted-hydrocarbyl radical wherein one or more hydrogen atoms is replaced by a halogen atom, hydrocarbyl-substituted metalloid radical wherein the metalloid is selected from Group IV-A of the Periodic Table of the Elements, or halogen radical. Suitable hydrocarbyl and substituted-hydrocarbyl radicals which may be substituted for at least one hydrogen atom in the cyclopentadienyl radical contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Similarly, and when X₁ and/or X₂ is a hydrocarbyl or substituted-hydrocarbyl radical, each may, independently, contain from 1 to 20 carbon atoms and be a straight or branched alkyl radical, a cyclic hydrocarbyl radical, an alkyl-substituted cyclic hydrocarbyl radical, an aromatic radical or an alkyl-substituted aromatic radical. Suitable organo-metalloid radicals include mono-, di- and trisubstituted organo-metalloid radicals of G roup IV-A elements wherein each of the hydrocarbyl moieties contain from 1 to 20 carbon atoms. Suitable organo-metalloid radicals include trimethylsilyl, tri-ethylsilyl, ethyldimethylsilyl, methyldiethylsilyl, triphenylgermyl and trimethylgermyl.

Illustrative examples (but not belonging to the invention) of bis(cylopentadienyl)zirconium compounds which may be used to prepare the catalyst component useful in the catalyst systems are dihydrocarbyl-substituted bis(cylopentadienyl)zirconium compounds such as bis(cylopentadienyl)zirconium dimethyl, bis(cylopentadienyl)zirconium diethyl, bis (cylopentadienyl)zirconiumdipropyl, bis(cylopentadienyl)zirconium dibutyl, bis(cylopentadienyl)zirconium diphenyl, bis (cylopentadienyl)zirconium dineopentyl, bis(cylopentadienyl)zirconium di(m-tolyl) and bis(cylopentadienyl)zirconium di(p-tolyl); (monohydrocarbyl-substituted cyclopentadienyl)zirconium compounds such as (methylcyclopentadienyl) (cyclopentadienyl) and bis(methylcyclopentadienyl)zirconium dimethyl, (ethylcyciopentadienyl)(cyclopentadienyl) and bis(ethylcyclopentadienyl)zirconium dimethyl, (propylcyclopentadienyl)(cyclopentadienyl) and bis(propylcyclopentadienyl)zirconium dimethyl, (n-butylcyclopentadienyl)(cyclopentadienyl) and bis(n-butylcyclopentadienyl)zirconium dimethyl, (1-butylcyclopentadienyl)(cyclopentadienyl) and bis(t-butylcyclopentadienyl)zirconium dimethyl, (cyclohexylmethylcyclopentadienyl)(cyclopentadienyl) and bis(cyclohexylmethylcyclopentadienyl)zirconium dimethyl, (benzylcyclopentadienyl)(cyclopentadienyl) and bis(benzylcyclopentadienyl)zirconium dimethyl, (diphenylmethylcyclopentadienyl)(cyclopentadienyl) and bis(diphenylmethylcyclopentadienyl)zirconium dimethyl, (mothylcyclopentadienyl)(cyclopentadienyl) and bis(methylcyclopentadienyl)zirconium dihydride, (ethylcyclopentadienyl)(cyclopentadienyl) and bis(ethylcyclopentadienyl)zirconium dihydride, (propylcyclopentadienyl)(cyclopentadienyl) and bis(propylcyclopentadienyl)zirconium dihydride, (n-butylcyclopentadienyl)(cyclopentadienyl) and bis(n-butylcyclopentadienyl)zirconium dihydride, (t-butylcyclopentadienyl)(cyclopentadienyl) and bis(t-butylcyclopentadienyl)zirconium dihydride, (cyclohexylmethylcyclopentadienyl)(cyclopentadienyl) and bis(cyclohexylmethylcyclopentadienyl)zirconium dihydride, (benzylcyclopentadienyl)(cyclopentadienyl) and bis(benzylcyclopentadienyl)zirconium dihydride, (diphenylmefhylcyciopentadienyl)(cyclopentadienyl) and bis(diphenylmethylcyclopentadienyl)zirconium dihydride; (polyhydrocarbyl-substituted-cyclopentadienyl)zirconium compounds such as (dimethylcyclopentadienyl)(cyclopentadienyl) and bis(dimethylcyclopentadienyl)zirconium dimethyl, (trimethylcyclopentbdienyl)(cyclopentadienyl) and bis(trimethylcyclopentadienyl) zirconium dimethyl, (tetramethylcyclopentadienyl)(cyclopentadienyl) and bis(tetramethylcyclopentadienyl)zirconium dimethyl, (permethylcyclopentadienyl)(cyclopentadienyl) and bis(permethylcyclopentadienyl)zirconium dimethyl, (ethyltetramethylcyclopentadienyl)(cyclopentadienyl) and bis(ethyltetramethylcyclopentadienyl)zirconium dimethyl, (indenyl)(cyclopentadienyl) and bis(indenyl)zirconium dimethyl, (dimethylcyclopentadienyl)(cyclopentadienyl) and bis (dimethylcyclopentadienyl)zirconium dihydride, (trimethylcyclopentadienyl)(cyclopentadienyl) and bis(trimethylcyclopentadienyl)zirconium dihydride, (tetramethylcyclopentadienyl)(cyclopentadienyl) and bis(tetramethylcyclopentadienyl)zirconium dihydride, (parmethylcyclopentadienyl)(cyclopentadienyl) and bis(permethylcyclopentadienyl)zirconium dihydride, (ethyltetramethylcyclopentadienyl)(cyclopentadienyl) and bis(ethyltetramethylcyclopentadienyl)zirconium dihydride, (indenyl)(cyclopentadienyl) and bis(indenyl)zirconium dihydride; (metal hydrocarbyl-substituted cyclopentadienyl)zirconium compounds such as (trimethylsilylcyclopentadienyl)(oyclopentadienyl) and bis(trimethylsilylcyclopentadienyl)zirconium dimethyl, (trimethylgermylcyclopentadianyl)(cyclopentadienyl) and bis(trimethylgermylcyclopentadienyl)zirconium dimethyl, (trimethylstannylcyclopentadienyl)(cyclopentadienyl) and bis(trimethylstannylcyclopentadienyl)zirconium dimethyl, (trimethylplumbylcyclopentadienyl)(cyclopentadienyl) and bis(trimethylplumbylcyclopentadienyl)zirconium dimethyl, (trimethylsilylcyclopentadienyl)(cyclopentadienyl) and bis(trimethylsilylcyclopentadienyl)zirconium dihydride, (trimethylgermylcyclopentadienyl)(cyclopentadienyl) and bis(trimethylgermylcyclopentadienyl)zirconium dihydride, (trimethylstannylcyclopentadienyl)(cyclopentadienyl) and bis (trimethylstannylcyclopentadiehyl)zirconium dihydride, (trimethylplumbylcyclopentadienyl)(cyclopentadienyl) and bis (trimethylplumblycyclopentadienyl)zirconium dihydride ; (halogen-substituted-cyclopentadienyl) zirconium compounds such as (trifluoromethylcyclopentadienyl) (cyclopentadienyl) and bis(trifluoromethylcyclopentadienyl)zirconium dimethyl (trifluoromethylcyclopentadienyl) (cyclopentadienyl) and bis(trifluoromethylcyclopentadienyl )zirconium dihydride silyl-substituted bis(cyclopentadienyl)zirconium compounds such as bis(cyclopentadienyl)(trimethylsilyl)-(methyl)zirconium, bis(cyclopentadienyl) (triphenylsilyl)(methyl)zirconium, bis(cyclopentadienyl) [tris(dimethylsilyl)silyl](methyl) zirconium, bis(cyclopentadienyl)-[bis(mesityl)silyl] (methyl)zirconium, bis-(cyclopentadienyl)(trimethylsilyl) trimethylsilylmethyl)zirconium and bis(cyclopentadienyl)(trimethylsilyl benzyl)zirconium ; (bridged-cyclopentadienyl)zirconium compounds such as methylene bis(cyclopentadienyl)zirconium dimethyl, ethylene bis(cyclopentadienyl)zirconium dimethyl, dimethylsilyl bis(cyclopentadienyl)zirconium dimethyl, methylene bis(cyclopentadienyl)zirconium dihydride, ethylene bis(cyclopentadienyl)zirconium dihydride and dimethylsilyl bis(cyclopentadienyl)zirconium dihydride ; zirconacycles such as bis(pentamethylcyclopentadienyl) zirconacyclobutane, bis(pentamethylcyclopentadienyl) zirconacyclopentane and bis(cyclopentadienyl)zirconaindane; olefin, diolefin and aryne ligand substituted bis(cyclopentadienyl) zirconium compounds such as bis(cyclopentadienyl)-(1,3-butadiene)zirconium, bis(cyclopentadlenyl)-(2,3,-dimethyl-1,3-butadiene)zirconium, bis(pentamethylcyclopentadienyl)(benzyne)zirconium; (hydrocarbyl) (hydride) bis(cyclopentadienyl)zirconium compounds such as bis(pentamethylcyclopentadienyl)zirconium (phenyl) (hydride) and bis(pentamethylcyclopentadienyl)zirconium (methyl)(hydride) and bis(cyclopentadienyl) zirconium compounds in which a substituent on the cyclopentadienyl radical is bound to the metal such as (pentamethylcyclopentadienyl) (tetramethylcyclopentadienylmethylene) zirconium hydride and (pentamethylcyclopentadienyl)(tetramethylcyclopentadienylmethylene) zirconium phenyl.

A similar list of illustrative bis(cyclopentadienyl) hafnium compounds of the invention could be given, but since the lists would be nearly identical to that already presented with respect to bis(cyclopentadienyl)zirconium compounds, such listings of the analogous hafnium compounds are not deemed essential to a complete disclosure. Those skilled in the art, however, are aware that bis(cyclopentadienyl)hafnium compounds corresponding to certain of the listed bis(cyclopentadienyl)zirconium compounds are not known. The lists would, therefore, be reduced by these compounds. Other bis(cyclopentadienyl)-hafnium compounds which are useful in the catalyst compositions will, of course, be apparent to those skilled in the art.

### Activator Compound of the Metallocene Catalyst

Compounds useful as an activator component in the preparation of the catalyst component of the catalyst system of this invention comprise a cation, which is a Bronsted acid capable of donating a proton, and a compatible noncoordinating anion containing a single coordination complex comprising a charge-bearing metal or metalloid core, which anion is relatively large (bulky), capable of stabilizing the active catalyst species (the hafnium cation) which is formed when the metallocene and activator compounds are combined and said anion is sufficiently labile to be displaced by olefinic, diolefinic and acetylenically unsaturated substrates or other neutral Lewis bases such as ethers, nitriles and the like. Any metal or metalloid capable of forming a coordination complex which is stable in water may be used or contained in the anion of the activator compound. Suitable metals, then, include, but are not limited to, aluminum, gold and platinum. Suitable metalloids include, but are not limited to, boron, phosphorus and, silicon. Salts containing anions comprising a coordination complex containing a single boron atom are preferred.

In general, the activator compounds useful in the preparation of the catalysts may be represented by the following general formula:

5. [(L'-H)⁺]_{d}[(M')^{m+}Q₁Q₂...Qₙ]^{d-}

wherein:
L' is a neutral Lewis base, H is a hydrogen atom, and [L'-H] is a Bronsted acid;
M' is a metal or metalloid selected from the Groups subtended by Groups V-B to V-A of the Periodic Table of the
Elements; i.e., Groups V-B, VI-B, VII-B, VIII, I-B, II-B, III-A, IV-A, and V-A;
Q₁ to Qₙ are, independently, hydride radical, dialkylamido radical, alkoxide radical, aryloxide radical, hydrocarbyl radical, substituted-hydrocarbyl radical or organometalloid radical and any one, but not more than one of Q₁ to Qₙ may be a halide radical;
"m" is an integer from 1 to 7;
"n" is an integer from 2 to 8; and
n-m = "d".

The most preferred activator components for use in preparing the catalyst component of the catalyst system of this invention are those wherein the compatible noncoordinating anion is a complex containing a single metal or metalloid atom. Of such activator components, the most preferred for use are those containing a single boron atom in the anion. Activator compounds comprising boron which are particularly useful in the preparation of the catalyst may be represented by the following general formula:

5A. [L'-H]⁺[BAr₁Ar₂X₃X₄]⁻

wherein: L' is a neutral Lewis base, H is a hydrogen atom, and [L'-H]⁺ is a Bronsted acid; B is boron in a valence state of 3; Ar₁ and Ar₂ are the same or different aromatic or substituted-aromatic hydrocarbon radicals containing from 6 to 20 carbon atoms and may be linked to each other through a stable bridging group; and X₃ and X₄ are independently, hydride radical, halide radical, provided that only one of X₃ or X₄ may be halide, hydrocarbyl radical containing from 1 to 20 carbon atoms, substituted hydrocarbyl radical containing from 1 to 20 carbon atoms wherein one or more of the hydrogen atoms is replaced by a halogen atom, hydrocarbyl-substituted metal (organometalloid) radical wherein each hydrocarbyl substitution contains from 1 to 20 carbon atoms and said metal is selected from Group IV-A of the Periodic Table of the Elements. Aromatic radicals suitable as the Ar₁ and Ar₂ groups include, but are not limited to, phenyl, naphthyl and anthracenyl radicals. Suitable substituents substituted aromatic hydrocarbon radicals suitable as the Ar₁ and Ar₂ groups, include, but are not necessarily limited to, hydrocarbyl radicals, organometalloid radicals, alkoxy radicals, alkylamido radicals, fluoro and fluoro-hydrocarbyl radicals. The substituent may be ortho, meta or para, relative to the carbon atom bonded to the boron atom. When either or both X₃ and X₄ are a hydrocarbyl radical, each may be the same or a different aromatic or substituted aromatic radical as are Ar₁ and Ar₂, or the same may be a straight or branched alkyl, alkenyl or alkynyl radical having from 1 to 20 carbon atoms, a cyclic hydrocarbon radical having from about 5 to about 8 carbon atoms or an alkyl-substituted cyclic hydrocarbon radical having from 6 to 20 carbon atoms. X₃ and X₄ may also, independently, be an alkoxy or dialkylamido radical wherein the alkyl portion of said alkoxy and dialkylamido radical contains from 1 to 20 carbon atoms; hydrocarbyl radical; or an organometalloid radical having from 1 to 20 carbon atoms and the like. As indicated Ar₁ and Ar₂ may be linked to each other. Similarly, either or both of Ar₁ and Ar₂ could be linked to either X₃ or X₄. Finally, X₃ and X₄ may also be linked to each other through a suitable bridging group.

Compounds containing anions which comprise coordination complexes containing a single metal or metalloid atom are, of course, well known and many, particularly compounds containing a single boron atom in the anion portion, are available commercially. In fight of this, salts containing anions comprising a coordination complex containing a single boron atom are preferred activator components.

Illustrative, but not limiting, examples of activator components useful in preparing catalyst components utilized in the catalyst system and process of this invention wherein the activator anion is a coordination complex containing a single metal or metalloid atom are trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-triflurormethylphenyl)boron, tributylammonium tetra(pentafluorophenyl)boron and, tri(n-butyl)ammonium tetra(o-tolyl)boron; N,N-dialkylanilinium salts such as N,N-dimethylanilinium tetra(phenyl)boron, N,N-diethylanilinium tetra(phenyl) boron and N,N-2,4,6-pentamethylanilinium tetra(phenyl)boron ; dialkyl ammonium salts such as di(i-propyl)ammonium tetra(pentafluorophenyl)boron and dicyclohexylammonium tetra(phenyl)boron; and triarylphosphonium salts such as triphenylphosphonium tetra(phenyl)boron, tri(methylphenyl)phosphoniun tetra(phenyl)boron and tri(dimethylphenyl) phosphonium tetra(phenyl)boron.

Similar lists of suitable compounds containing other metals and metalloids which are useful as activator components could be given, but such lists are not deemed necessary to a complete disclosure. In this regard, it should be noted that the foregoing list is not intended to be exhaustive and other boron compounds that would be useful, as well as useful activator compounds containing other metals or metalloids, would be readily apparent from the foregoing general equations to those skilled in the art.

### Group III-A Element Compound

Any solvent or diluent previously described as suitable for preparing the ionic metallocene catalyst is also suitable as a polymerization diluent for preparing catalyst systems of the invention.

Group III-A additive compounds suitable for use in preparing catalyst systems of the invention are represented by the following general formula: 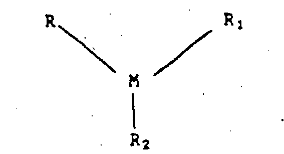 wherein: M is a Group III-A element, preferably aluminum and boron; R, R₁ and R₂ are, independently, a straight or branched chain alkyl radical, a cyclic hydrocarbyl radical, an alkyl-substituted cydohydrocarbyl radical, an aromatic radical or an alkyl-substituted radical of C₁ to C₂₀ in carbon number. R₂ may also be an alkoxide or aryloxide radical of C₁ to C₂₀ in carbon number.

Illustrative, but non-limiting, examples of Group III-A element compounds which are suitable are: when M is aluminum (AI) the trialkyl aluminums such as trimethyl aluminum, triethyl aluminum, tri-n-propyl aluminum, tri-isopropyl aluminum, tri-n-butyl aluminum, tri-sec-butyl aluminum, tri-t-butyl aluminum, tri-isobutyl aluminum, tri-n-penyl aluminum, tri-isopentyl aluminum, tri-neopentyl aluminum, tricyclopentylaluminum, tri-n-hexylaluminum, tri-(4-methylphenyl aluminum, tri-(3-methylpentyl) aluminum and tricyclohexyl aluminum; alkyl aluminums such as dimethylethyl aluminum, methyldiethyl aluminum; ethyldimethyl aluminum, dimethyl-n-propyl aluminum, methyldi-n-propyl aluminum, dimethylisopropyl aluminum, dimethylcyclohexyl aluminum and methylethylpropyl aluminum; aryl and alkyl-substituted aluminums, such as triphenyl aluminum, tri-p-tolyl aluminum, tri-m-tolyl aluminum and tri-ethyl aluminum. Also suitable are aluminum alkoxides and aryloxides such as dimethyl aluminum methoxide, dimethyl aluminum ethoxide, diethyl aluminum ethoxide, diethyl aluminum isopropoxide, methyl ethyl aluminum methoxide, dimethyl aluminum 4-methylphenoxide, dimethyl aluminum 3-methylphenoxide, dimethyl aluminum 2,6-diisopropylphenoxide and dimethyl aluminum 2,6-di-t-butyl-4-methylphenoxide.

A similar list of illustrative Group III-A element compounds when M is boron could be made for the trialky boranes, alkyl boranes, and alkyl borane alkoxides. Also a similar list could be given for the analogous compounds of gallium and indium, although the gallium and indium analogies are much less preferred. Such list would be nearly identical to that already presented with respect to the aluminum species of Group III-A element compounds and therefore such listing of the borane analogous and other Group III-A elements analogous are not necessary to a complete disclosure.

Preferred Group III-A element compounds are those wherein M is aluminum or boron. Of the aluminum species of Group III-A element compounds, the most preferred are trialkylaluminums, and of the trialkylaluminums the most preferred are triethylaluminum and trimethylaluminum. Of the Group III-A element compounds wherein M is boron, the preferred boron species of Group III-A element compounds are trialkylboranes of which the most preferred is triethylborane.

When the catalyst system of the invention is to be employed for the production of polyethylene, the Group III-A element compound preferred for use in forming the catalyst system is triethylaluninum. When a catalyst system of the invention is to be employed for the production of a copolymer, the Group III-A element compound preferred for use is a trialkylboron, most preferably triethylborane.

Depending upon the particular metallocene employed in preparing the ionic metallocene catalyst component of the catalyst system, and depending upon the nature of the polyolefin product to be prepared using such catalyst system, one type or species of Group III-A element compound may be more desirable than another.

### Choice of Metallocene-Activator Pairs

In general, and while most metallocenes identified above may be combined with most activators identified above to produce an active olefin polymerization catalyst, it is important to continued polymerization operations that either a metal cation initially formed from the metallocene or a decomposition product thereof be a relatively stable catalyst. It is also important that the anion of the activator be stable to hydrolysis when an ammonium salt is used. Further, it is important that the acidity of the activator be sufficient, relative to the metallocene, to facilitate the needed proton transfer. Conversely, the basicity of the metal complex must also be sufficient to facilitate the needed proton transfer. Certain metallocene compounds - using bis(pentamethylcyclopentadienyl)hafnium dimethyl as an illustrative, but not limiting example - are resistant to reaction with all but the strongest Bronsted acids and thus are not suitable as metallocenes to form the catalysts of this invention. In general, bis(cyclopentadienyl)metal compounds which can be hydrolyzed by aqueous solutions can be considered suitable as metallocenes to form the catalysts described herein.

With respect to the combination of metallocenes to activators to form a catalyst of this invention, it should be noted that the two compounds combined for preparation of the active catalyst must be selected so as to avoid transfer of a fragment of the anion, particularly an aryl group, to the metal cation, thereby forming a catalytically inactive species. This could be done by steric hindrance, resulting from substitutions on the cyclopentadienyl carbon atoms as well as substitutions on the aromatic carbon atoms of the anion. It follows, then, that metallocenes comprising perhydrocarbyl-substituted cyclopentadienyl radicals could be effectively used with a broader range of activators than could metallocenes comprising unsubstituted cyclopentadienyl radicals. As the amount and size of the substitutions on the cyclopentadienyl radicals are reduced, however, more effective catalysts are obtained with activators containing anions which are more resistant to degradation, such as those with substituents on the ortho positions of the phenyl rings. Another means of rendering the anion more resistant to degradation is afforded by fluorine substitution, especially perfluoro-substitution, in the anion. Fluoro-substituted stabilizing anions may, then, be used with a broader range of metallocenes.

While the inventors do not wish to be bound by any particular theory, it is believed that when the two compounds used to prepare the improved catalysts of the present invention are combined in a suitable solvent or diluent, all or a part of the cation of the activator (the acidic proton) combines with one of the substituents on the metallocenes. In the case where the metallocene has a formula corresponding to that of general formula 1, a neutral compound is liberated, which neutral compound either remains in solution or is liberated as a gas. In this regard, it should be noted that if either X₁ or X₂ in the metallocene is a hydride, hydrogen gas may be liberated. Similarly, if either X₁ or X₂ is a methyl radical, methane may be liberated as a gas. In the cases where the metallocene has a formula corresponding to those of general formulae 2, 3 or 4, one of the substituents on the metallocene component is protonated but, in general, no substituent is liberated from the metal. It is preferred that the molar ratio of metallocene to activator be 1:1 or greater. The conjugate base of the cation of the second compound, if one remains, will be a neutral compound which will remain in solution or complex with the metal cation formed, though, in general an activator is chosen such that any binding of the neutral conjugate base to the metal cation will be weak or non-existent. Thus, as the steric bulk of this conjugate base increases, it will, simply, remain in solution without interfering with the active catalyst. Similarly, if the cation of the activator is a trialkyl ammonium ion, this ion will liberate a hydrogen atom to form gaseous hydrogen, methane or the like and the conjugate base of the cation will be a tertiary amine. In like fashion, if the cation were a hydrocarbyl-substituted phosphonium ion containing at least one reactive proton, as is essential to the present invention, the conjugate base of the cation would be a phosphine.

While still not wishing to be bound by any particular theory, it is also believed that as one of the metallocene substituents (a ligand) is liberated, the noncoordinating anion originally contained in the activator used in the catalyst preparation combines with and stabilizes either the metal cation formed from the metallocene, formally having a coordination number of 3 and a +4 valence, or a decomposition product thereof. The metal cation and noncoordinating anion will remain so combined until the catalyst is contacted with one or more olefins, diolefins, cyclic olefins and/or acetylenically unsaturated monomers either alone or in combination with one or more other monomers or another neutral Lewis base. As indicated supra, the anion contained in the activator must be sufficiently labile to permit rapid displacement by an olefin, diolefin, cyclic olefin or an acetylenically unsaturated monomer to facilitate polymerization.

The chemical reactions which occur in forming the catalysts of this invention may, when a preferred, boron containing compound is used as the activator, be represented by reference to the general formulae set forth herein as follows:

1. (A-Cp)MX₁X₂ + [L'-H]⁺[BAr₁Ar₂X₃X₄]⁻ → [(A-Cp)MX₁]⁺[BAr₁AR₂X₃X₄]⁻ + HX₂ + L' or [(A-Cp)MX₂)⁺[BAr₁Ar₂X₃x₄]⁻ + HX₁₋ + L'

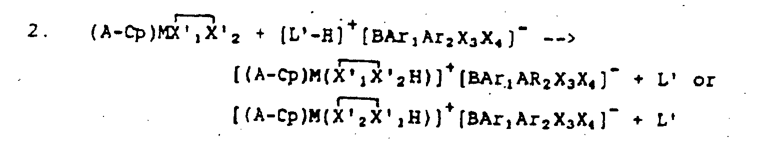

3. (A-Cp)ML + [L'-H]⁺[BAr₁AR₂X₃X₄]⁻ → [(A-Cp)M[LH)]⁺[BAr₁Ar₂X₃X₄]⁻ + L'

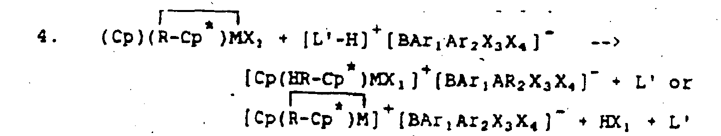

In the foregoing equations, the numbers correspond to the numbers set forth in combination with the general equations for useful metallocene compounds of hafnium. In general, the stability and rate of formation of the products in the foregoing reaction equations, particularly the metal cation, will vary depending upon the choice of the solvent, the acidity of the [L'-H]⁺ selected, the particular L', the anion, the temperature at which the reaction is completed and the particular dicyclopentadienyl derivative of the metal selected. Generally, the initially formed ion-pair will be an active polymerization catalyst and will polymerize ethylene with other monomers. In some cases, however, the initial metal cation will decompose to yield an active polymerization catalyst.

As indicated supra, most metallocenes identified above will combine with most activators identified above to produce an active catalyst, particularly an active polymerization catalyst. The actual active catalyst species is not, however, always sufficiently stable as to permit its separation and subsequent identification. Moreover, and while many of the initial metal cations formed are relatively stable, it has become apparent that the initially formed metal cation frequently decomposes into one or more other catalytically active species.

While still not wishing to be bound by any particular theory, it is believed that the active catalyst species which have not been characterized, including active decomposition products, are of the same type as those which have been isolated and fully characterized or at least retain the essential ionic structure required for functioning as a catalyst. More particularly, it is believed that the active catalyst species which have not been isolated, including active decomposition products, are the same type as the isolated and characterized active catalyst species in that these species contain a bis(cyclopentadienyl)metal center which center remains cationic, unsaturated and has a metal-carbon bond which is reactive with olefins, diolefins, cylic olefins and acetylenically unsaturated compounds. Furthermore, it is believed that the decomposition products may react with hydrogen gas to enter into a common state of equilibrium involving the cationic hydride complex, [Cp'CpMH]⁺X⁻.

### Polymerization Process

The process of this invention is one which polymerizes ethylene monomer to provide ethylene copolymers of narrow molecular weight distribution and higher weight average molecular weights than that heretofore attainable with a metallocene activated to an active catalyst species by an alkyl aluminum or alumoxane cocatalyst. The process of this invention obtains such high molecular weight polyethylene at a rate of ionic metallocene catalyst productivity which is substantially greater than heretofore observed for a system of ionic metallocene catalyst.

The preferred polymerization process utilizing the invention catalyst system comprises the steps of: (1) contacting the monomers with a catalyst system comprising, in a polymerization diluent, the reaction product of a bis (cyclopentadienyl) hafnium compound and an activator compound - each as previously described for the production of an ionic metallocene catalyst --, and a Group III-A element compound -- as previously described --; (2) continuing the contact of such monomer with such catalyst system for a time sufficient to polymerize at least a portion of such monomer; and (3) recovering a polymer product.

In a preferred embodiment of the present invention, a bis(cyclopentadienyl)-hafnium compound containing two, independently, substituted or unsubstituted cyclopentadienyl radicals and one or two lower alkyl substituents and/or one or two hydride substituents will be combined with a tri-substituted ammonium salt of either a substituted or unsubstituted tetra(aromatic)boron. Each of the tri-substitutions in the ammonium cation will be the same or a different lower alkyl or aryl radical. By lower alkyl is meant an alkyl radical containing from 1 to 4 carbon atoms. When the bis (cyclopentadienyl)metal compound used is a bis(perhydrocarbyl-substituted cyclopentadienyl)metal compound, an unsubstituted or partially substituted tetra(aromatic)boron salt may be used. Tri(n-butyl)ammonium tetra(phenyl)boron, tri(n-butyl) ammonium tetra(p-tolyl)boron and tri(n-butyl)ammonium tetra(p-ethylphenyl)boron are particularly preferred. As the number of hydrocarbyl-substitutions on the cyclopentadienyl radicals is reduced, however, substituted anions will be used in the tri-substituted ammonium salts, particularly, pentafluoro-substituted anions. N,N-dimethylanilinium tetra(fluorophenyl)boron is particularly preferred.

Certain of the catalysts of this invention, based on hafnocenes - using the catalyst produced from the reaction of bis(cyclopentadienyl)hafnium dimethyl and the tri-substituted ammonium salt of tetra(pentafluorophenyl)boron as an example - when used as described herein for the copolymerization of ethylene with α-olefins, diolefins, and/or acetylenically unsaturated monomers, in the absence of a chain transfer agent, can lead to the production of extremely high molecular weight copolymers having relatively narrow molecular weight distributions. In this regard, it should be noted that copolymers having molecular weights up to about 2 x 10⁶ or higher and molecular weight distributions within the range of 1.5 to 15 is can be produced with the catalysts of this invention. The substituents of the cyclopentadienyl radicals, however, can exert a profound influence on polymer molecular weights and degree of comonomer incorporation.

The ionic metallocene catalysts containing a metallocene component which.is either a pure enantiomer or the racemic mixture of two enantiomers of a rigid, chiral metallocene can polymerize prochiral olefins (propylene and higher α-olefins) to isotactic polymers. Bis(cyclopentadienyl)metal compounds in which each of the cyclopentadienyl radicals is substituted and containing a covalent bridging group between the two cyclopentadienyl radicals are particularly useful for isotactic polymerizations of this type. Prochiral metallocenes, for example these based on complexes of isopropyl-2-cyclopentadienyl-2-(1-fluorenyl) hafnium, can be used to polymerize propylene or higher α-olefins to syndiotactic polymers.

A particularly surprising feature of some of the ionic metallocene catalysts based on hafnocenes in combination with an activator component comprising perfluorinated tetraphenylborate anions, is that when these catalysts are used to copolymerize α-olefins, either alone or in combination with diolefins, the amount of higher molecular weight olefin or diolefin incorporated into the copolymer is significantly increased when compared to copolymers prepared with the more conventional Ziegler-Natta type catalysts and bis(cyclopentadienyl)zirconium catalysts. The relative rates of reaction of ethylene and higher α-olefins with the aforementioned hafnium-based catalysts of this invention are much closer than with conventional Ziegler-Natta type catalysts of the Group IV-B metals. The comonomer distribution in copolymers prepared with the ionic metallocene catalysts, particularly with the lowera-olefins and lower diolefins, will range from near perfectly alternating to statistically random.

While the ionic metallocene catalysts do not contain pyrophoric species, it is nevertheless preferred that the catalyst components be handled in an inert, moisture-free, oxygen-free environment such as argon, nitrogen, or helium because of the sensitivity of the catalyst components to moisture and oxygen. The Group III-A element compounds must also be handled in a similar manner.

In the preferred method, the metallocene and activator components are combined in a first step in an aromatic solvent to produce a solution of the ionic metallocene catalyst. This reaction may be carried out in the temperature range of -100°C to 300°C, preferably 0° to 100°C. Holding times to allow for the completion of the reaction may range from 10 seconds to 60 minutes depending upon variables such as reaction temperature and choice of reactants.

Once the ionic metallocene catalyst component is formed, the order or method of addition of the Group III-A element compound to the polymerization diluent with ionic metallocene catalyst is not critical. That is, the catalyst system may be formed by: 1) first adding the Group III-A element compound to the polymerization diluent followed by addition of the ionic metallocene catalyst; 2) direct addition of the Group III-A element compound to a solution of ionic metallocene catalyst after which the common solution is added to a polymerization diluent; or 3) a portion of the Group III-A element compound may be added to a liquid monomer and supplied to the polymerization diluent containing ionic metallocene catalyst as the liquid monomer is supplied to the diluent. When a liquid monomer is used in the polymerization process, it is preferred to add the Group III-A element compound to the liquid monomer. The additive may be added neat or as a solution in a suitable hydrocarbon solvent, preferably an aliphatic or aromatic solvent.

Compared to an ionic metallocene catalyst in a polymerization diluent from which a Group III-A element compound is absent, the use of too great an amount of Group III-A element compound in forming a catalyst system of the invention will suppress the Productivity of the ionic metallocene catalyst component. On the other hand, the use of too small an amount of Group III-A element compound will not produce an enhancement in productivity of the ionic metallocene catalyst system. The optimum amount of Group III-A element compound for use in producing catalyst systems of the invention is dependent, in part upon the amount of Lewis base impurities contained in the polymerization diluent and/ or monomers used in polymerization. In a typical polymerization process, it is expected that the optimum amount of Group III-A element compound to be added to obtain a catalyst system of maximum productivity will amount to a mole ratio of G roup III-A element compound to activator compound of from 1:1 to 200:1, preferably 14:1 to 150:1.

For a given polymerization process, the optimum amount of Group III-A element compound to be added to a polymerization diluent in which an ionic metallocene catalyst component is present for forming a catalyst system of enhanced activity may readily be determined by monitoring the level of monomer consumption while adding the Group III-A element compound to the polymerization diluent until an amount of Group III-A element compound has been added which maximizes the rate at which the monitored monomer is consumed by the polymerization reaction. Alternatively, a portion of the Group III-A element compound is first added to the polymerization diluent after which the ionic metallocene catalyst is added and polymerization is initiated and the rate of monomer consumption is monitored. Then, while polymerization is ongoing, an additional quantity of the Group III-A element compound is added and the consumption is observed. It should, however, be borne in mind that the.objective of adding the additive is to neutralize adventitious impurities such as water or oxygen so that the level of additive addition should also be proportioned to the level of impurities present. Thus, it may be advantageous to pretreat a monomer having a relatively high level of such impurities with the additive before the monomer is brought into contact with the catalyst system.

In general, the catalyst systems of this invention will polymerize ethylene with other olefins and/or other unsaturated monomers at conditions well known in the prior art for conventional Ziegler-Natta catalysts.

Monomers which may be utilized in practice of the process in addition to ethylene include α-olefins, diolefins, and acetylenically unsaturated hydrocarbons containing from 2 to 18 carbon atoms. Such monomers include cyclic and acyclic hydrocarbons, and straight or branched chain hydrocarbons. Illustrative, and not limiting, of suitable monomers are: propylene, 1-butene, 1-pentene, 1-hexene, 1-octene and 1-decene; 2-methyl-1-propene, 3-methyl-1-butene, 2-methyl-1-butene, 3-methyl-1-pentene and 4-melhyl-1-pentene; 1,3-butadiene, 1,4-pentadiene, 1,5-hexadiene and 1,4-hexadiene; cyclopentene, cyclohexane and cycloheptene; propyne, butadyne and 1-4-hexadiyne.

In a most preferred embodiment of the present invention, bis(cyclopentadienyl)hafnium dimethyl is reacted with N,N-dimethylanilinium tetra(pentafluorophenyl)boron to produce the most preferred ionic metallocene catalyst. The metallocene and activator are combined at a temperature within the range from 0°C to 100°C, preferably in an aliphatic hydrocarbon solvent, most preferably hexane or condensed propylene. Nominal holding times within the range from 10 seconds to 60 minutes are sufficient to produce the preferred ionic metallocene catalyst. The ionic metallocene catalyst is thereafter added to a polymerization diluent to which a Group III-A element compound, preferablytriethylaluminum or triethylboron, has previously been added. The catalyst system so resulting is then, immediately after formation, used to copolymerize ethylene at a temperature within the range from 0°C to 100°C, more preferably at from 25 to 100°C, and at a pressure within the range from 1.03 to 34.45 bar G (15 to 500 psig). In a most preferred embodiment of the present invention, the most preferred catalyst system is used to copolymerize ethylene with a lower α-olefin having from 3 to 6 carbon atoms, thereby yielding a plastic or an elastomeric copolymer. In the preferred process embodiments, the monomers are maintained at polymerization conditions for a nominal holding time within the range from 1 to 60 minutes and the system is within the range from 10⁻⁶ to 10⁻⁵ moles of Group IV-B metal per liter of polymerization diluent, while a mole ratio of the Group III-A element compound to activator compound employed is maintained at from 15:1 to 150:1.

The use of the invention catalyst system which includes an additive for neutralizing impurities results in an improvement of from 20 to 400% or more in ionic metallocene catalyst productivity over the ionic metallocene catalyst without the additive.

In general, catalyst systems can be tailored so as to produce polymer products which will be substantially freer of certain trace metals generally found in polymers produced with Ziegler-Natta type catalysts such as aluminum, magnesium and chloride. Thus, for instance, the level of impurities may be monitored continuously and the rate of additive injection may be controlled to provide only that quantity of additive necessary to protect the catalyst sites from deactivation and not such an excess of additive so as to impair product quality or necessitate further processing to purify -the polymer product. The polymer products produced with the invention ionic metallocene catalyst system have a broader range of applications than polymers produced with either the more conventional Ziegler-Natta type catalysts comprising a metal alkyl, such as an aluminum alkyl, or the metallocene-alumoxane catalysts which typically require an excess of the alumoxane catalyst.

The following examples serve to illustrate the invention and some of its advantages and are not intended to limit the scope of the invention as disclosed above or claimed hereafter.

### EXAMPLES

### Example 1

In this procedure, ethylene and propylene were copolymerized by adding, under a nitrogen atmosphere, 0.2 ml of a 25 wt.% solution of triethylaluminum in hexane followed by 10 ml of a toluene solution containing 36 mg of bis (cyclopentadienyl)hafnium dimethyl and 11 mg of N,N-dimethylanilinium tetrakis(pentafluorophenyl)boron to a 1 liter stainless-steel autoclave previously flushed with nitrogen. Propylene (400 ml) was then added to the autoclave which was heated to 40°C and further pressurized with 13.78 bar (200 psig) of ethylene. After 30 minutes, the autoclave was vented and opened. The yield of ethylene-propylene copolymer was 65 g. The copolymer contained 67 wt.% ethylene, and had a molecular weight of 210,000 and a molecular weight distribution of 1.98. Under similar conditions, but in the absence of triethylaluminum, 37 grams of an ethylene-propylene copolymer were obtained with an ethylene content of 56 wt.%, a molecular weight of 548,000 and a molecular weight distribution of 1.66.

### Example 2

The procedure of Example 1 was repeated using 0.2 mmole triethylborane, instead of the triethylaluminum, and a toluene solution (10 ml) containing 24 mg of bis(cyclopentadienyl)hafnium dimethyl and 8 mg of N,N-dimethylanilinium tetrakis(pentafluorophenyl)boron. The yield of ethylene-propylene copolymer was 10.8 g. The copolymer contained 60.8 wt.% ethylene, and had a M_{w} of 508,000 and a MWD of 1.74. Under similar conditions, but in the absence of triethylborane, 2.0 g of polymer were obtained with an ethylene content of 31.9 wt.%, a M_{w} of 541,000 and a MWD of 1.88.

## Claims

1. A process for producing copolymers of ethylene monomer comprising
(I) contacting the monomer in a polymerising diluent with:
(a) an ionic pair comprising
(i) a cation of a bis(cyclopentadienyl) hafnium compound, and
(ii) a labile, bulky anion of an activator compound comprising which anion is a single coordination complex having a plurality of lipophilic radicals covalently coordinated to and shielding a central charge bearing metal or metalloid atom, the bulk of said anion being such that the anion is sterically hindered from covalently coordinating to the hafnium cation, and the lability of said anion being such that it is displaceable from said hafnium cation by an unsaturated hydrocarbon having a Lewis base strength equal to or greater than ethylene; and
(b) a hydrolysable Lewis acid of the formula 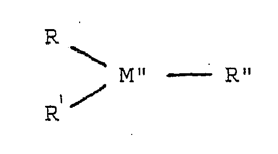
wherein M" is a Group III-A element, R, R' and R" are independently, a straight or branched chain alkyl radical, a cyclic hydrocarbyl radical, an alkyl substituted cyclic hydrocarbyl radical, an aromatic radical or an alkyl substituted radical having from C₁-C₂₀ in carbon number, and R' may also be an alkoxide radical having from C₁ to C₂₀ in carbon number,
the ionic pair being the reaction product of a bis(cyclopentadienyl)hafnium compound having a proton reactable substituent, and an activator compound comprising a cation having a donatable proton, and said labile bulky anion,
said hafnium compound and said activator compound being present in amounts sufficient to provide a catalytically active species; and said Group III-A element compound being present in an amount sufficient to neutralize adventitious impurities,
(II) continuing the contacting step of (I) for a sufficient period of time to polymerize at least a portion of the monomer, and
(III) thereby forming a copolymer product.

2. The process of claim 1 wherein the ratio of said activator compound to said hafnium compound is from 1:1 to 20:1 and the ratio of said Group III-A element compound to said activator compound is from 1:1 to 200:1, preferably up to 100:1.

3. The process according to claim 1 or claim 2 wherein said bis(cyclopentadienyl) hafnium is derived from a compound represented by one of the following general formulae:
1. (A-Cp) MX₁X₂ 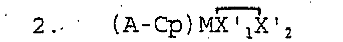
3. (A-Cp) ML 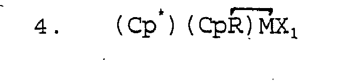
wherein: M is hafnium;
(A-Cp) is either (Cp)(Cp*) or Cp-A'-Cp* and Cp and Cp* are the same or different substituted or unsubstituted cyclopentadienyl radical;
A' is a covalent bridging group;
L is an olefin, diolefin or aryne ligand:
X₁ and X₂ are, independently, hydride radical, hydrocarbyl radical, substituted-hydrocarbyl radical, or organometalloid radical;
X'₁ and X'₂ are joined and bound to the M metal atom to form a metallacycle, in which the M metal atom, X'₁ and
X'₂ form a hydrocarbocyclic ring containing from about 3 to about 20 carbon atoms; and R is a substituent on one cyclopentadienyl radical which is bound to the M metal atom.

4. The process according to any of the preceding claims, wherein said anion is derived from activator compound represented by the following general formula:
[(L'-H)⁺]_{d}[(M')^{m+}Q₁Q₂...Qₙ]^{d-}
wherein:
L' is a neutral Lewis base, H is a hydrogen atom, and [L'-H] is a Bronstedt acid;
M' is a metal or metalloid selected from Groups V-B, VI-B, VII-B, VIII, I-B, II-B, III-A, IV-A; and V-A;
Q₁ to Qₙ are, independently, hydride radical, dialkylamido radical, alkoxide radical, aryloxide radical, hydrocarbyl radical, substituted-hydrocarbyl radical or organometalloid radical and any one, but not more than one of Q₁ to Qₙ a halide radical;
"m" is an integer from 1 to 7;
"n" is an integer from 2 to 8; and
n - m = "d"

5. The process according to any of the preceding claims, wherein the hydrolyzable Lewis acid comprises a trialkylaluminium or a trialkylborane and preferably comprises triethylaluminium, trimethylaluminium or triethylborane.

6. The process according to any of the preceding claims, wherein said anion is derived from an activator compound represented by the following general formula:
[L'-H]⁺[BAr₁Ar₂X₃X₄]⁻
wherein:
L' is neutral Lewis base, H is a hydrogen atom, and [L¹-H]⁺ is a Bronstedt acid;
B is boron in a valence state of 3;
Ar₁ and Ar₂ are the same or different aromatic or substituted aromatic hydrocarbon radicals which radicals may be linked to each other through a stable bridging group; and X₃ and X₄ are, independently, hydride radical, halide radical, hydrocarbyl radical substituted-hydrocarbyl radical, or an organometalloid radical.

7. The process of claim 6, wherein said hafnium compound is represented by the following general formula:
(A-Cp)MX₁X₂
wherein:
M is hafnium;
(A-Cp) is either (Cp)(Cp*) or Cp-A'-Cp* and Cp and Cp* are the same or different substituted or unsubstituted cyclopentadienyl radicals;
A' is a covalent bridging group;
X₁ and X₂ are, independently, hydride radical, hydrocarbyl radical, substituted-hydrocarbyl radical, or an organometalloid radical and
said anion is derived from an activator compound which is a trisubstituted ammonium salt of a substituted aromatic boron compound and preferably is tri (n-butyl) - ammonium tetrakis(pentafluorophenyl)boron or N,N-dimethylanilinium tetrakis(pentafluorophenyl)boron.

## Patentansprüche

1. Verfahren zur Herstellung von Copolymeren von Ethylenmonomer, bei dem
(I) das Monomer in einem Polymerisationsverdünnungsmittel mit
(a) einem Ionenpaar, das
(i) ein Kation einer Bis(cyclopentadienyl)hafniumverbindung und
(ii) in labiles, raumerfüllendes Anion einer Aktivatorverbindung umfaßt, wobei das Anion ein Einzel-Koordinationskomplex mit mehreren lipophilen Resten ist, die kovalent an ein zentrales ladungstragendes Metall- oder Metalloidatom koordiniert sind und dieses abschirmen, wobei der Raumbedarf des Anions so ist, daß das Anion sterisch daran gehindert wird, mit dem Hafniumkation kovalent zu koordinieren, und die Labilität des Anions so ist, daß es von dem Hafniumkation durch einen ungesättigten Kohlenwasserstoff mit einer Lewisbasenstärke gleich der oder stärker als die von Ethylen verdrängt werden kann, und
(b) einer hydrolysierbaren Lewissäure mit der Formel 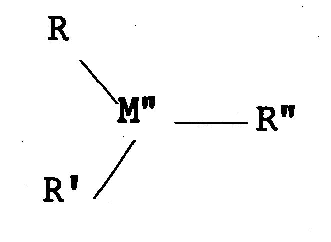
in der M" ein Gruppe-III-A-Element ist, R, R' und R" unabhängig ein geradkettiger oder verzweigtkettiger Alkylrest, ein cyclischer Kohlenwasserstoffrest, ein alkylsubstituierter cyclischer Kohlenwasserstoffrest, ein aromatischer Rest oder ein alkylsubstituierter Rest mit einer Kohlenstoffzahl von C₁ bis C₂₀ ist, wobei R' auch ein Alkoxidrest mit einer Kohlenstoffzahl von C₁ bis C₂₀ sein kann,
kontaktiert wird, wobei das Ionenpaar das Reaktionsprodukt einer Bis(cyclopentadienyl)hafniumverbindung mit einem mit Protonen reagierbaren Substituenten und einer Aktivatorverbindung ist, die ein Kation mit einem abgebbaren Proton und das labile raumerfüllende Anion umfaßt,
wobei die Hafniumverbindung und die Aktivatorverbindung in ausreichenden Mengen vorhanden sind, um katalytisch aktive Spezies zu liefern, und die Verbindung des Gruppe-III-A-Elements in einer ausreichenden Menge vorhanden ist, um unbeabsichtigte Verunreinigungen zu neutralisieren,
(II) das In-Kontakt-bringen in Schritt (I) einen ausreichenden Zeitraum lang fortgesetzt wird, um zumindest einen Teil des Monomers zu polymerisieren,
(III) wodurch das Copolymerprodukt gebildet wird.

2. Verfahren nach Anspruch 1, bei dem das Verhältnis der Aktivatorverbindung zu der Hafniumverbindung 1:1 bis 20:1 und das Verhältnis der Verbindung des Gruppe-III-A-Elements zu der Aktivatorverbindung 1:1 bis 200:1, vorzugsweise bis zu 100:1 beträgt.

3. Verfahren nach Anspruch 1 oder Anspruch 2, bei dem das Bis-(cyclopentadienyl)hafnium von einer Verbindung abgeleitet ist, die durch eine der folgenden allgemeinen Formeln wiedergegeben wird:
1. (A-Cp)MX₁X₂ 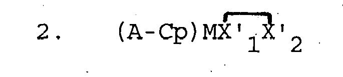
3. (A-Cp)ML 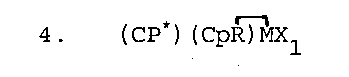
in der M ein Gruppe-IV-B-Metall ist,
(A-Cp) entweder (Cp)(Cp*) oder Cp-A'-Cp* ist und Cp und Cp* die gleichen oder unterschiedliche substituierte oder unsubstituierte Cyclopentadienylreste sind;
A' eine kovalente Brückengruppe ist,
L ein Olefin-, Diolefin- oder Arinligand ist,
X₁ und X₂ unabhängig ein Hydridrest, Kohlenwasserstoffrest, substituierter Kohlenwasserstoffrest oder ein Organometalloidrest sind,
X'₁ und X'₂ verbunden und an das M-Metallatom gebunden sind, um einen Metallacyclus zu bilden, in dem das M-Metallatom,
X'₁ und X'₂ einen kohlenwasserstoffcyclischen Ring mit etwa 3 bis etwa 20 Kohlenstoffatomen bilden, und R ein Substituent an einem Cyclopentadienylring ist, der an das M-Metallatom gebunden ist.

4. Verfahren nach einem der vorhergehenden Ansprüche, bei dem das Anion von einer Aktivatorverbindung abgeleitet ist, die durch die folgende allgemeine Formel wiedergegeben wird:
[L'-H)⁺]_{d}[(M')^{m+}Q₁Q₂...Qₙ]^{d-}
in der
L' eine neutrale Lewisbase ist,
H ein Wasserstoffatom ist und
[L'-H] eine Brönstedtsäure ist,
M' ein Metall oder Metalloid ausgewählt aus den Gruppen V-B, VI-B, VII-B, VIII, I-B, II-B, III-A, IV-A und V-A ist,
Q₁ bis Qₙ unabhängig ausgewählt sind aus der Gruppe bestehend aus Hydridresten, Dialkylamidoresten, Alkoxidresten, Aryloxidresten, Kohlenwasserstoffresten, substituierten Kohlenwasserstoffresten und Organometalloidresten, wobei einer, aber nicht mehr als einer aus Q₁ bis Qₙ ein Halogenidrest ist,
"m" eine ganze Zahl von 1 bis 7 ist,
"n" eine ganze Zahl von 2 bis 8 ist, und
n - m = "d" ist.

5. Verfahren nach einem der vorhergehenden Ansprüche, bei dem die hydrolysierbare Lewissäure ein Trialkylaluminium oder ein Trialkylboran umfaßt und vorzugsweise Triethylaluminium, Trimethylaluminium oder Triethylboran umfaßt.

6. Verfahren nach einem der vorhergehenden Ansprüche, bei dem das Anion von einer Aktivatorverbindung abgeleitet ist, die durch die folgende allgemeine Formel wiedergegeben wird:
[L'H]⁺[BAr₁Ar₂X₃X₄]⁻
in der
L' eine neutrale Lewisbase ist,
H ein Wasserstoffatom ist und
[L'-H]⁺ eine Brönstedtsäure ist,
B Bor in der Wertigkeitsstufe 3 ist,
Ar₁ und Ar₂ die gleichen oder unterschiedliche aromatische oder substituierte aromatische Kohlenwasserstoffreste sind, die über eine stabile Brückengruppe miteinander verbunden sein können, und
X₃ und X₄ unabhängig ein Hydridrest, Halogenidrest, Kohlenwasserstoffrest, substituierter Kohlenwasserstoffrest oder ein Organometalloidrest sind.

7. Verfahren nach Anspruch 6, bei dem die Hafniumverbindung durch die folgende allgemeine Formel wiedergegeben wird:
(A-Cp) MX₁X₂
in der
M Zirconium oder Hafnium ist,
(A-Cp) entweder (Cp)(Cp*) oder Cp-A'-Cp* ist und Cp und Cp* die gleichen oder unterschiedliche substituierte oder unsubstituierte Cyclopentadienylreste sind;
A' eine kovalente Brückengruppe ist,
X₁ und X₂ unabhängig ein Hydridrest, Kohlenwasserstoffrest, substituierter Kohlenwasserstoffrest oder ein Organometalloidrest sind und
das Anion von einer Aktivatorverbindung abgeleitet ist, die ein trisubstituiertes Ammoniumsalz einer substituierten aromatischen Borverbindung ist und vorzugsweise Tri(n-butyl)ammonium-tetrakis(pentafluorphenyl)bor oder N,N-Dimethylanilinium-tetrakis(pentafluorphenyl)bor ist.

## Revendications

1. Procédé de production de copolymères de monomère d'éthylène, comprenant
(I) la mise en contact du monomère dans un diluant de polymérisation avec :
(a) une paire ionique comprenant :
(i) un cation d'un composé de bis(cyclopentadiényl)-hafnium, et
(ii) un anion volumineux labile d'un composé activateur, anion qui est un complexe de coordination simple comportant une pluralité de radicaux lipophiles en coordination covalente avec, et faisant écran à, un atome de métal ou métalloïde central porteur de charge, le volume dudit anion étant tel que l'anion, par encombrement stérique, ne puisse présenter une coordination covalente avec le cation hafnium, et la labilité dudit anion étant telle que cet anion soit déplaçable dudit cation hafnium par un hydrocarbure insaturé ayant une force de base de Lewis égale ou supérieure à celle de l'éthylène ; et
(b) un acide de Lewis hydrolysable de formule 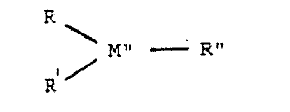
dans laquelle M'' représente un élément du Groupe III-A, R, R' et R'' représentent indépendamment un radical alkyle à chaîne droite ou ramifiée, un radical hydrocarbyle cyclique, un radical hydrocarbyle cyclique à substituant alkyle, un radical aromatique ou un radical de 1 à 20 atomes de carbone à substituant alkyle, et R' peut représenter également un radical alcoolate ayant 1 à 20 atomes de carbone,
la paire ionique étant le produit de réaction d'un composé de bis(cyclopentadiényl)hafnium ayant un substituant apte à la réaction avec les protons, et d'un composé activateur comprenant un cation ayant un proton pouvant être cédé, et ledit anion volumineux labile,
ledit composé d'hafnium et ledit composé activateur étant présents en des quantités suffisantes pour fournir une entité catalytiquement active ; et ledit composé d'un élément du Groupe III-A étant présent en une quantité suffisante pour neutraliser les impuretés fortuitement présentes,
(II) la continuation de l'étape de contact de l'étape (I) pendant une période de temps suffisante pour polymériser au moins une partie du monomère, et
(III) ainsi, la formation d'un produit copolymère.

2. Procédé suivant la revendication 1, dans lequel le rapport du composé activateur au composé d'hafnium est de 1:1 à 20:1 et le rapport du composé du Groupe III-A au composé activateur est de 1:1 à 200:1, de préférence jusqu'à 100:1.

3. Procédé suivant la revendication 1 ou la revendication 2, dans lequel le composé de bis(cyclopentadiényl)-hafnium est dérivé d'un composé représenté par une des formules générales suivantes :
1. (A-Cp)MX₁X₂ 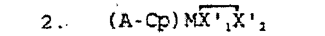
3. (A-Cp)ML 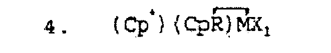
dans lesquelles M représente l'hafnium ;
(A-Cp) représente un groupe (Cp)(Cp*) ou Cp-A'-Cp* et Cp et Cp* sont identiques ou différents et représentent chacun un radical cyclopentadiényle substitué ou non substitué ;
A' représente un groupe covalent de pontage ;
L représente un ligand oléfine, dioléfine ou aryne ;
X₁ et X₂ représentent indépendamment un radical hydrure, un radical hydrocarbyle, un radical hydrocarbyle substitué ou un radical organométalloïdique ;
X'₁ et X'₂ sont réunis et liés à l'atome de métal M pour former un métallacycle, dans l'atome de métal M, X'₁, et X'₂ forment un noyau hydrocarbocyclique contenant environ 3 à environ 20 atomes de carbone ; et R représente un substituant sur un radical cyclopentadiényle qui est lié à l'atome de métal M.

4. Procédé suivant l'une quelconque des revendications précédentes, dans lequel l'anion est dérivé d'un composé activateur représenté par la formule générale suivante :
[(L'-H)⁺]_{d}[M')^{m+}Q₁Q₂ ... Qₙ]^{d-}
dans laquelle
L' représente une base de Lewis neutre, H représente un atome d'hydrogène et [L'-H] représente un acide de Bronstedt ;
M' représente un métal ou métalloïde choisi dans les groupes V-B, VI-B, VII-B, I-B, II-B, III-A, IV-A ; et V-A ;
Q₁ à Qₙ représentent, indépendamment, un radical hydrure, un radical dialkylamino, un radical alcoolate, un radical aryloxyde, un radical hydrocarbyle, un radical hydrocarbyle substitué ou un radical organométalloïdique et l'un quelconque, mais pas plus d'un, des groupes Q₁ à Qₙ représente un radical halogénure ;
"m" est un nombre entier de 1 à 7 ;
"n" est un nombre entier de 2 à 8 ; et
n - m = "d".

5. Procédé suivant l'une quelconque des revendications précédentes, dans lequel l'acide de Lewis hydrolysable comprend un trialkylaluminium ou un trialkylborane, et comprend de préférence le triéthylaluminium, le triméthylaluminium ou le triéthylborane.

6. Procédé suivant l'une quelconque des revendications précédentes, dans lequel l'anion est dérivé d'un composé activateur représenté par la formule générale suivante :
[L'-H]⁺[BAr₁Ar₂X₃X₄] -
dans laquelle :
L' représente une base de Lewis neutre, H représente un atome d'hydrogène, et [L'-H]⁺ représente un acide de Bronstedt ;
B représente le bore à un état de valence égal à 3 ;
Ar₁ et Ar₂ représentent des radicaux hydrocarbonés aromatiques ou aromatiques substitués identiques ou différents, radicaux qui peuvent être liés l'un à l'autre par un groupe de pontage stable ; et X₃ et X₄ représentent, indépendamment, un radical hydrure, un radical halogénure, un radical hydrocarbyle, un radical hydrocarbyle substitué ou un radical organométalloïdique.

7. Procédé suivant la revendication 6, dans lequel le composé d'hafnium est représenté par la formule générale suivante :
(A-Cp)MX₁X₂
dans laquelle :
M représente l'hafnium ;
(A-Cp) représente un groupe (Cp)(Cp*) ou Cp-A'-Cp* et Cp et Cp* représentent des radicaux cyclopentadiényle substitués ou non substitués identiques ou différents ;
A' représente un groupe de pontage covalent ; et
X₁ et X₂ représentent, indépendamment, un radical hydrure, un radical hydrocarbyle, un radical hydrocarbyle substitué ou un radical organométalloïdique,et
l'anion est dérivé d'un composé activateur qui est un sel d'ammonium trisubstitué d'un composé de bore aromatique substitué et consiste de préférence en tri(n-butyl)ammonium-tétrakis(pentafluorophényl)bore ou N,N-diméthylanilinium-tétrakis(pentafluorophényl)bore.
